# EUROPEAN PATENT APPLICATION

(11) **EP 2 793 530 A1**
(43) Date of publication of application: **22.10.2014**
(21) Application number: 12858117.0
(22) Date of filing: 12.11.2012
(51) Int. Cl.: H04W 92/00

(54) **METHOD AND DEVICE FOR SESSION HANDLING**

(30) Priority: 15.12.2011 CN 201110420097
(71) Applicant: ZTE Corporation, Shenzhen, Guangdong 518057 (CN)
(72) Inventor: LIU, Guoyan, Shenzhen, Guangdong 518057 (CN); ZHU, Chunhui, Shenzhen, Guangdong 518057 (CN)
(74) Representative: Delorme, Nicolas
(86) International application number: PCT/CN2012/084481
(87) International publication number: WO 2013/086917

(57) **Abstract**

Disclosed are a method and device for session handling. The method includes: during a process that a UE accesses an EPC via a trusted non-3GPP access, a non-3GPP access network functional entity sensing successful authentication or detachment or PDN disconnection of the UE; and the non-3GPP access network functional entity notifying a trusted network access gateway to transmit to a PDN GW a create session request message or a delete session request message. The present invention remedies the shortcoming in the related art, when core network charging is uniformly applied, with respect to a UE-initiated detach procedure, because a stop charging message is not received by an AAA proxy of a WLAN side, that the trusted network access gateway cannot be triggered to transmit to the PDN GW the delete session procedure.

## Description

### TECHNICAL FIELD

The present invention relates to the field of communications, and in particular to a method and device for session handling.

### BACKGROUND

An Evolved Packet System (EPS) of the 3rd Generation Partnership Project (3GPP) is composed of an Evolved Universal Terrestrial Radio Access Network (E-UTRAN), a Mobility Management Entity (MME), a Serving Gateway (S-GW), a Packet Data Network Gateway (P-GW), and a Home Subscriber Server (HSS).

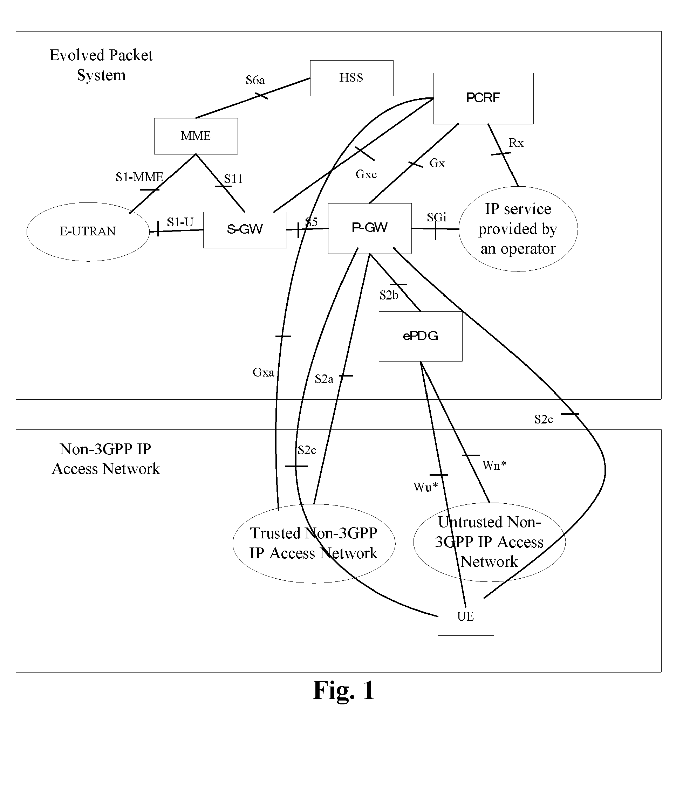

Figure 1 is a schematic diagram showing the network structure of a 3GPP network being interconnected with a non-3GPP network. As shown in Figure 1, an EPS supports the interconnection with the non-3GPP network, wherein the interconnection with the non-3GPP network is implemented via an interface S2a/b/c, and a P-GW is the anchor between the 3GPP system and the non-3GPP system. In the architecture of the EPS, the non-3GPP system access is classified into a untrusted non-3GPP access and a trusted non-3GPP access; wherein the untrusted non-3GPP access needs to be connected to the P-GW via the Evolved Packet Data Gateway (ePDG), the interface between the ePDG and the P-GW is the S2b; the non-3GPP access can be connected to the P-GW directly via the interface S2a, the interface S2a adopts a Proxy Mobile IPv6 (PMIP) protocol to interact information; additionally, the interface S2c provides support for the control and mobility relevant to a user interface between a User Equipment (UE) and the P-GW, the mobility management protocol supported by it is Mobile IPv6 Support for Dual Stack Hostsand Routers (DSMIPv6), which can be used to untrusted non-3GPP and trusted non-3GPP accesses.

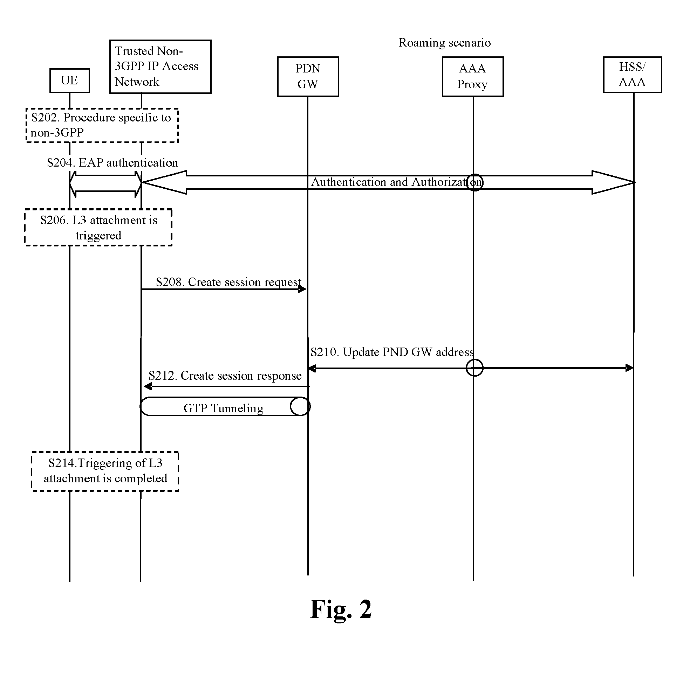

A Wireless Local Area Network (WLAN) can access the Evolved Packet Core (EPC) as a non-3GPP system, which involves the interconnection and intercommunication issue of fixed-mobile convergence that many operators concerns. Figure 2 is a flow chart of a UE accessing an EPC via a trusted WLAN according to the related art. As shown in Figure 2, the flow includes the following steps S202 to S214.

In the step S202, the UE and the AP/RG perform the flow specific to the non-3GPP.

In the step S204, EPA authentication is performed.

In the step S206, a L3 attachment is triggered.

In the step S208, the non-3GPP access network creates a session request to the PDN GW.

In the step S210, a PDN GW address is updated between the PDN GW and a HSS/AAA.

In the step S212, the PDN GW returns a session creation response to the non-3GPP access network.

In the step S214, the triggering of the L3 attachment is completed.

At present, there are many studies on the procedure and policy intercommunication of the interfaces S2b and S2c, but few on the interfaces S2a. The subject of the study on S2a mobility based on GTP & WLAN access to EPC (SaMOG) mainly studies the WLAN as a trusted non-3GPP IP access (TNAN), and the interconnection and intercommunication issue of the UE accessing the EPC by the interfaces S2a.

The study solutions of the SaMOG subject is mainly divided into a solution having no impacts on the User Equipment (UE) and a solution having impacts on the UE. The so called solution having impacts on the UE is that the UE can transfer information such as a requested Access Point Name (APN) specific to the 3GPP to a mobile core network.

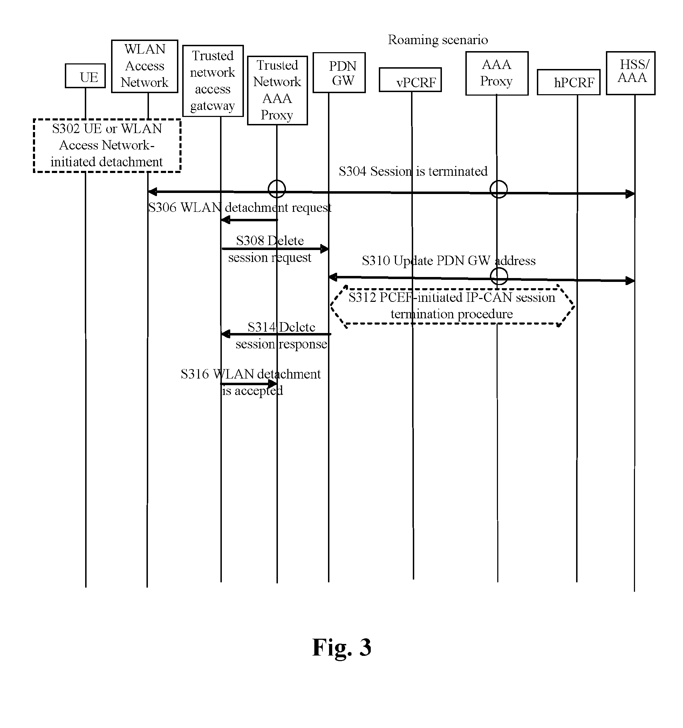

At present stage, what is mainly studied is the solution having no impacts on the UE. In the related art, the TNAN is mainly triggered to create a session to the 3GPP core network PDN GW by the L2 Extensible Authentication Protocol (EAP) message or the L3 message. Wherein for the L2 EAP triggering mode, the authentication authorization and accounting (AAA) proxy of the WLAN network receives an EAP successful authentication message to trigger a access controller (AC) or a Broadband Network Gateway (BNG) supporting the functions of the AC to initiate an establish GPRS Tunnelling Protocol (GTP) /PMIP Tunnelling to the PDN GW. Figure 3 is a flow chart of detachment triggered by the AAA proxy according to the related art. As shown in Figure 3, the flow includes the following steps S302 to S316.

In the step S302, the UE or the WLAN access network initiates a detachment procedure.

In the step S304, after receiving a detachment message, the WLAN access network may initiate a session termination message which can be a stop charging message to the AAA server.

In the step S306, after sensing the session termination message, the AAA proxy of a WLAN side may transmit to the trusted network access gateway a WLAN detachment request message.

In the step S308, the trusted network access gateway deletes the session request.

In the step S310, the PDN GW address is updated between the PDN GW and the HSS/AAA.

In the step S312, a PCRF initiates an IP-CAN session termination procedure.

In the step S314, the PDN GW deletes the session response.

In the step S316, the trusted network access gateway transmits to the AAA proxy a detachment reception message.

After receiving the detachment request message from the AAA proxy of the WLAN side, the trusted network access gateway may trigger to transmit to the PDN GW the delete session procedure.

It can be seen from the above procedures that the AAA proxy of the WLAN side receives the stop charging message to trigger the trusted network access gateway to initiate to the PDN GW the delete GTP/PMIP Tunnelling. In the solution, the AAA proxy triggering the trusted network access gateway to create/delete tunnelling relies on the state of the local charging message of the WLAN network, but for the case where a fixed network and a mobile network are the same operator, it is possible for the trusted network access gateway not to transmit the charging message to the AAA proxy, but uniformly apply core network charging (core network charging typically does not apply AAA server accounting). Therefore, with respect to a UE-initiated detachment procedure or PDN disconnection procedure, because a stop charging message is not received by the AAA proxy of the WLAN side, the trusted network access gateway cannot be triggered to transmit to the PDN GW the delete session procedure.

### SUMMARY

The present invention provides a method and device for session handling to at least solve the problem that an AAA server cannot notify the trusted network access gateway to delete session to the PDN GW in the case where AAA server accounting is not applied in the related art.

According to one aspect of the invention, a method for session handling is provided, including: during a process that a User Equipment (UE) accesses an Evolved Packet Core (EPC) via a trusted non-3rd Generation Partnership Project (3GPP), a non-3GPP access network functional entity sensing successful authentication or detachment or Packet Data Network (PDN) disconnection of the UE; and the non-3GPP access network functional entity notifying a trusted network access gateway to transmit to a Packet Data Network Gateway (PDN GW) a create session request message or a delete session request message.

Preferably, the non-3GPP access network functional entity notifying the trusted network access gateway to transmit to the PDN GW the create session request message or the delete session request message includes: the non-3GPP access network functional entity transmitting a Wireless Termination Point (WTP) event request message to the trusted network access gateway, wherein the WTP event request message is used to notify the trusted network access gateway to request the PDN GW to create or delete a session.

Preferably, the non-3GPP access network functional entity transmitting the WTP event request message to the trusted network access gateway includes: the non-3GPP access network functional entity transmitting the WTP event request message to the trusted network access gateway via a pre-established Control And Provisioning of Wireless Access Points Protocol (CAPWAP) channel.

Preferably, in a case where the WTP event request message is used to notify the trusted network access gateway to request the PDN GW to create the session, the non-3GPP access network functional entity transmitting the WTP event request message to the trusted network access gateway includes one of the follows: in a case where there is an Access Point Name (APN) requested by the UE in the non-3GPP access network functional entity, the non-3GPP access network functional entity transmitting to the trusted network access gateway the WTP event request message including the APN of the UE; and in a case where there is not the APN requested by the UE in the non-3GPP access network functional entity, the non-3GPP access network functional entity transmitting to the trusted network access gateway the WTP event request message including a default APN.

Preferably, in a case where the WTP event request message is used to notify the trusted network access gateway to request the PDN GW to delete the session, the non-3GPP access network functional entity transmitting to the trusted network access gateway the WTP event request message includes: the non-3GPP access network functional entity transmitting to the trusted network access gateway the WTP event request message including delete UE information.

Preferably, after the non-3GPP access network functional entity transmits to the trusted network access gateway the WTP event request message, the method further includes: the non-3GPP access network functional entity receiving a WTP event response message from the trusted network access gateway, wherein the WTP event response message is used to indicate a successful session creation or deletion between the trusted network access gateway and the PDN GW.

Preferably, after the non-3GPP access network functional entity receives the WTP event response message from the trusted network access gateway, the method further includes: in a case where the WTP event request message is used to notify the trusted network access gateway to request the PDN GW to create the session, the non-3GPP access network functional entity transmitting to the UE an Extensible Authentication Protocol (EAP) success message.

Preferably, in a case where there is an Access Point Name (APN) of the UE in the non-3GPP access network functional entity, the non-3GPP access network functional entity carries the APN and a MAC address of the UE in a WTP event request message.

Preferably, the non-3GPP access network functional entity includes one of the following: an Access Point (AP), and a Residential Gateway (RG).

Preferably, the trusted network access gateway includes one of the following: an Access Controller (AC), and a Broadband Network Gateway (RNG).

According to another aspect of the present invention, a device for session handling is provided, the device is applied to a non-3rd Generation Partnership Project (3GPP) access network functional entity, and includes: a sensing module configured to sense, during a process that a User Equipment (UE) accesses an Evolved Packet Core System (EPC) via a trusted non-3GPP, successful authentication or detachment or Packet Data Network (PDN) disconnection of the UE; and a notifying module configured to notify a trusted network access gateway to transmit to a Packet Data Network Gateway (PDN GW) a create session request message or a delete session request message.

Preferably, the notifying module includes: a transmitting sub-module configured to transmit a Wireless Termination Point (WTP) event request message to the trusted network access gateway, wherein the WTP event request message is used to notify the trusted network access gateway to request the PDN GW to create or delete a session.

Preferably, the transmitting sub-module includes: a transmitting unit configured to transmit the WTP event request message to the trusted network access gateway via a pre-established Control And Provisioning of Wireless Access Points Protocol (CAPWAP) channel.

By the present invention, a non-3GPP access network functional entity notifying the trusted network access gateway to transmit to the PND GW a create session request message or a delete session request message solves the problem that an AAA server will not be able to notify the trusted network access gateway to delete session to the PDN GW in the case where AAA server accounting is not applied in the related art.

### BRIEF DESCRIPTION OF DRAWINGS

Drawings, provided for further understanding of the present invention and forming a part of the specification, are used to explain the present invention together with embodiments of the present invention rather than to limit the present invention, in the accompanying drawings:
Figure 1 is a schematic diagram showing a network structure of a 3GPP network being interconnected with a non-3GPP network according to the related art;
Figure 2 is a flow chart of a UE accessing an EPC by a trusted WLAN according to the related art;
Figure 3 is a flow chart of detachment triggered by the AAA proxy according to the related art;
Figure 4 is a flow chart of session handling according to an embodiment of the invention.
Figure 5 is a flow chart of the attachment of the UE accessing an EPC via a trusted non-3GPP access according to a preferred embodiment 1 of the present invention;
Figure 6 is flow chart of the UE detachment or PDN disconnection according to a preferred embodiment 2 of the present invention;
Figure 7 is a block diagram of the structure of the device for session handling according to an embodiment of the invention;
Figure 8 is a block diagram 1 of the structure of the device for session handling according to a preferred embodiment of the invention;
Figure 9 is a block diagram 2 of the structure of the device for session handling according to a preferred embodiment of the invention;
Figure 10 is a block diagram 3 of the structure of the device for session handling according to a preferred embodiment of the invention;

### DESCRIPTION OF EMBODIMENTS

It should be noted that the embodiments and the characteristics of the embodiments can be combined with each other if no conflict is caused. The present invention will be explained below with reference to the drawings and in conjunction with the embodiments in detail.

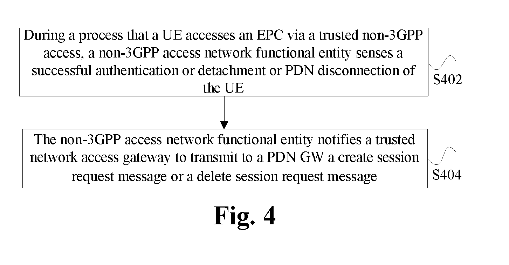

The present invention provides a method for session handling. Fig. 4 is a flow chart of the method for session handling according to an embodiment of the invention, including the following steps S402 and step S404.

In the step 402, during a process that a UE accesses an EPC via a trusted non-3GPP access, the non-3GPP access network functional entity senses successful authentication or detachment or PDN disconnection of the UE.

In the step 404, the non-3GPP access network functional entity notifies a trusted network access gateway to transmit to a PDN GW a create session request message or a delete session request message.

In the related art, an AAA server notifies the trusted network access gateway to create or delete a session to the PDN GW; however, in the case where AAA server accounting is not applied, the AAA server cannot perform the above notification. In an embodiment of the invention, the non-3GPP access network functional entity performs the above notification, thus being able to remedy the shortcoming in the related art.

Preferably, the non-3GPP access network functional entity notifying the trusted network access gateway to transmit to the PDN GW the create session request message or the delete session request message includes: the non-3GPP access network functional entity transmitting a Wireless Termination Point (WTP) event request message to the trusted network access gateway, wherein the WTP event request message is used to notify the trusted network access gateway to request the PDN GW to create or delete a session.

Preferably, the non-3GPP access network functional entity transmitting the WTP event request message to the trusted network access gateway includes: the non-3GPP access network functional entity transmitting the WTP event request message to the trusted network access gateway via a pre-established CAPWAP channel.

Preferably, in a case where there is an Access Point Name (APN) of the UE in the non-3GPP access network functional entity, the non-3GPP access network functional entity carries the APN and a MAC address of the UE in the WTP event request message. It should be noted that including the MAC address of the UE in the message can ensure that the trusted network access gateway associate the APN it carries to a particular UE.

Preferably, in a case where the WTP event request message is used to notify the trusted network access gateway to request the PDN GW to create a session, the non-3GPP access network functional entity transmitting to the UE the trusted network access gateway the WTP event request message includes one of: in a case where there is the Access Point Name (APN) requested by the UE in the non-3GPP access network functional entity, the non-3GPP access network functional entity transmitting to the trusted network access gateway the WTP event request message including the APN of the UE; and in a case where there is not the APN requested by the UE in the non-3GPP access network functional entity, the non-3GPP access network functional entity transmitting to the trusted network access gateway the WTP event request message including a default APN.

Preferably, in a case where the WTP event request message is used to notify the trusted network access gateway to request the PDN GW to delete a session, the non-3GPP access network functional entity transmitting to the trusted network access gateway the WTP event request message includes: the non-3GPP access network functional entity transmitting to the trusted network access gateway the WTP event request message including delete UE information.

Preferably, after the non-3GPP access network functional entity transmits to trusted network access gateway the WTP event request message, the method further includes: the non-3GPP access network functional entity receiving a WTP event response message from the trusted network access gateway, wherein the WTP event response message is used to indicate a successful session creation or deletion between the trusted network access gateway and the PDN GW.

Preferably, after the non-3GPP access network functional entity receives the WTP event response message from the trusted network access gateway, the method further includes: in a case where the WTP event request message is used to notify the trusted network access gateway to request the PDN GW to create a session, the non-3GPP access network functional entity transmitting to the UE an EAP success message.

Preferably, the non-3GPP access network functional entity includes one of: AP and RG.

Preferably, the trusted network access gateway includes one of: AC and BNG.

The solution can remedy the shortcoming of the related art, and the solution also applies to the solution having impacts on the UE. Wherein the Access Point (AP) or the Residential Gateway (RG) supporting AP functions is the equipment in the WLAN access network, and AC/BNG is the trusted network access gateway.

The implementation of the embodiments of the present invention is described below with reference to examples in detail.

In the invention, for a UE accesses an EPC via a trusted non-3GPP access, the AP/RG triggers the AC/BNG to initiate a create/delete session to the PDN GW.

Preferred embodiment 1

In this preferred embodiment 1, what is mainly described is that when the UE accesses the EPC via the trusted non-3GPP access, the AP/RG, as an EAP authenticator, can sense the UE attachment and initiate a CAPWAP message to the AC/BNG, thus the AC/BNG triggers a process of establishing core network tunnelling.

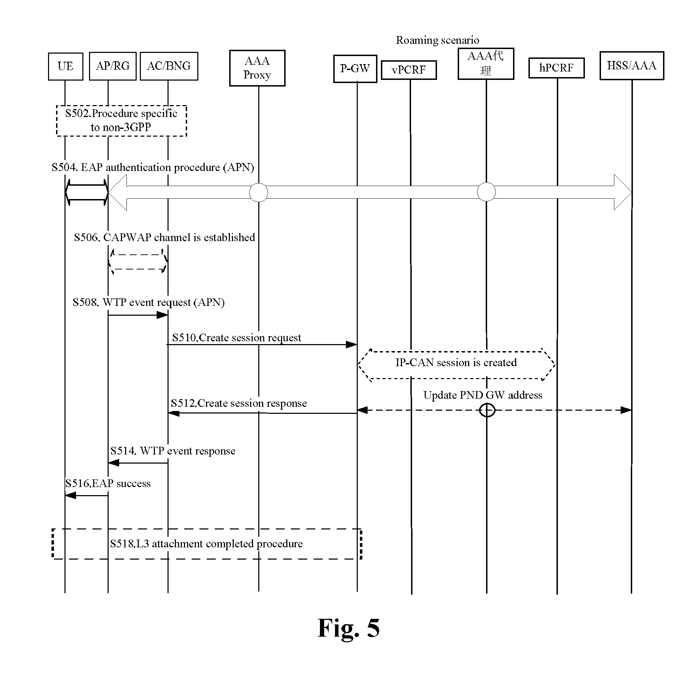

Figure 5 is a flow chart of the UE accessing the EPC via the trusted non-3GPP access according to preferred embodiment 1 of the present invention. As shown in Figure 5, the flow includes the following steps S502 to S518.

In the step S502, the UE and the AP/RG perform the procedure specific to the non-3GPP.

In the step S504, the AP/RG, as an Extensible Authentication Protocol (EAP) authenticator may trigger an EAP authentication procedure to the UE. If the UE supports APN information including a request, the APN information is carried in an EAP-RES/Identity message to the AC/BNG; if the UE does not support APN information including a request, the HSS carries a default APN to the AP/RG via the AAA server.

In the step S506, the AP/RG may establish a CAPWAP channel immediately after being powered on, and the establishment may occur at any time before the step S504; if no CAPWAP channel is established before the step S504, then a CAPWAP channel procedure is established between the AP/RG and the AC/BNG.

In the step S508, after the AP/RG receives an EAP successful authentication message, the AP/RG transmits to the AC/BNG a Wireless Termination Point event request message, wherein the APN requested by the UE or the default APN information is carried in the message. Wherein if there is an APN requested by the UE, the AP/RG must carry the APN requested by the UE. In addition, the message also needs to carry a UE MAC address to enable the AC/BNG to associate the APN that it carries to the particular UE.

In the step S510, after receiving the WTP event request message, the AC/BNG may initiate a session creation procedure to the PDN GW, and the AC/BNG carries the APN requested by the UE or the default APN information to the PDN GW.

In the step S512, the PDN GW can decide whether to assign an IP address to the UE according to a particular policy, and returns it to the AC/BNG. If the PDN GW decides to assign an IP address, the AC/BNG saves the IP address assign to the UE locally; if not, in the subsequent receiving a route request message or a DHCP request message, the AC/BNG requests the PDN GW to assign an IP address by updating a including message or other address request messages.

In the step S514, after receiving the session creation response message, the AC/BNG may transmit the WTP event response message to the AP/RG.

In the step S516, after receiving the WTP event response message, the AC/BNG may transmit an EAP success message to the UE. Optionally, it is possible for the AP/RG to transmit the EAP success message to the UE at any time between the steps S504-S516.

In the step S518, the UE performs a L3 complete attachment procedure, in the procedure, the UE may an IP address via the address request message, particularly IPv4 or IPv6 type. The address request message can be a DHCPv4 message, or a route request message, or a DHCPv6 message.

Preferred embodiment 2

In the preferred embodiment 2, what is mainly described is that the UE implements a process of detachment or PDN disconnection after accessing the EPC via the trusted non-3GPP access.

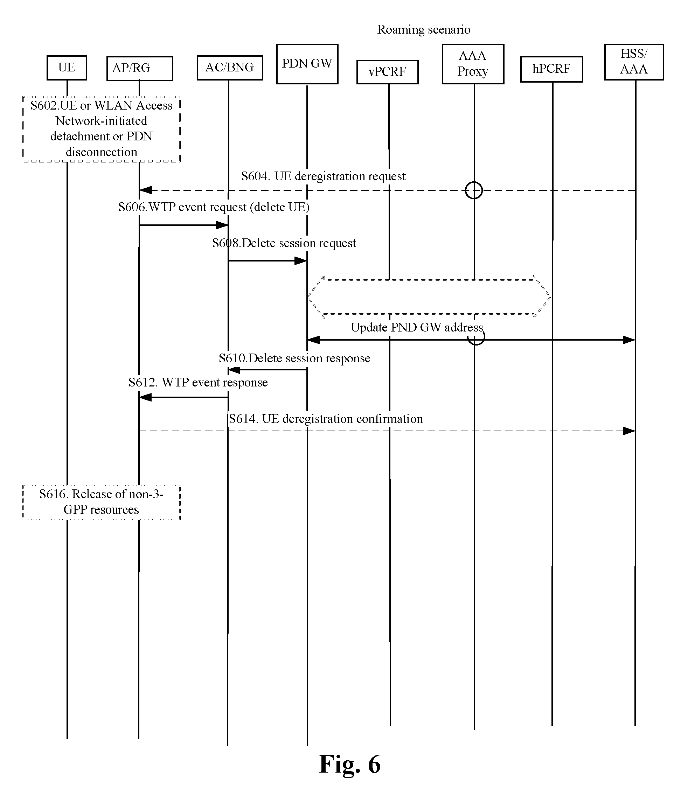

Figure 6 is a flow chart of the UE detachment or PDN disconnection according to the preferred embodiment 2 of the present invention. As shown in Figure 6, the flow includes the following steps S602 to S616.

In the step S602, the UE or the WLAN access network may initiate a detachment or PDN disconnection procedure.

In the step S604, because the subscription information of a user is deleted or the user is required to be authenticated/authorized again, it is also possible for the HSS/AAA to transmit to the WLAN access network AP/RG a UE deregistration request message.

In the step S606, after receiving the message from the step S602 or the step S604, the AP/RG may transmit the WTP event request message to the AC/BNG, delete UE information is carried in the message.

In the step S608, after receiving the WTP event request message, the AC/BNG may initiate a delete session request to the PDN GW according to the delete UE information in the message.

In the step S610, the PDN GW replies a delete session response message to the AC/BNG.

In the step S612, after receiving the delete session response message, the AC/BNG may transmit the WTP event response message to the AP/RG.

In the step S614, if the detachment procedure is initiated by the HSS/AAA, the AP/RG may transmit a UE deregistration confirmation message to the HSS/AAA.

In the step S616, the UE performs a release procedure of non-3GPP resources.

In the above preferred embodiments, what is established between a non-3GPP access network element and the PDN GW is GTP Tunnelling. The present invention also applies to the establishment of PMIP Tunnelling, which can be achieved by replacing corresponding messages, for example, a session creation request message is replaced by a proxy binding update message, and a session creation response message is replaced by a proxy binding confirmation message, the parameters required to be added also apply to PMIP messages.

It should be noted that the steps shown in the flow chart of the drawings can be executed, for example, in a computer system with a set of instructions executable by a computer, in addition, a logic order is shown in the flowchart, but the shown or described steps can be executed in a different order under some conditions.

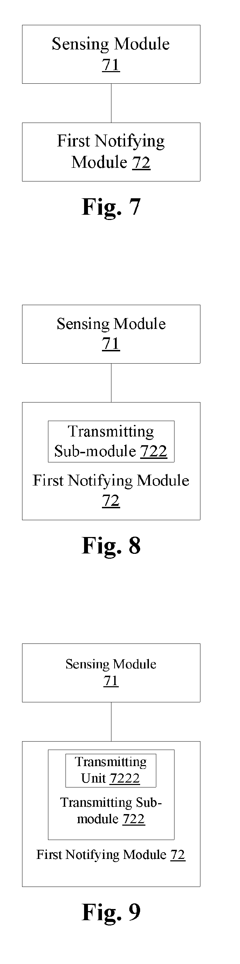

The present invention provides a device for session handling, which device can be used to implement the above method for session handling. Fig. 7 is a block diagram of the structure of the device for session handling according to an embodiment of the present invention. The device for session handling includes a sensing module 71 and a first notifying module 72. Its structure is described below in detail.

The sensing module **71** is configured to sense, during a process that a UE accesses an EPC via a trusted non-3GPP access, a successful authentication or detachment or PDN disconnection of the UE; the first notifying module **72** triggered by the sensing module **71** is configured to notify a trusted network access gateway to transmit to a PDN GW a create session request message or a delete session request message.

Fig. 8 is a block diagram 1 of the structure of the device for session handling according to a preferred embodiment of the invention. As shown in Figure 8, the first notifying module **72** includes a transmitting sub-module **722** configured to transmit to the trusted network access gateway the WTP event request message, wherein the WTP event request message is used to notify the trusted network access gateway to request the PDN GW to create or delete a session.

Fig. 9 is a block diagram 2 of the structure of the device for session handling according to a preferred embodiment of the invention. As shown in Figure 9, the transmitting sub-module **722** includes a transmitting unit **7222** configured to transmit the WTP event request message to the trusted network access gateway via a pre-established CAPWAP channel.

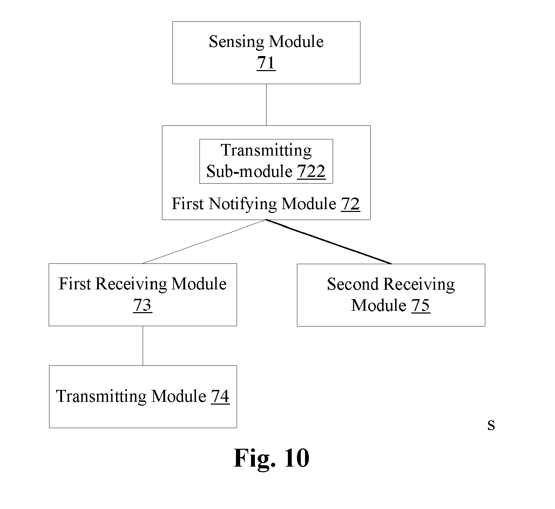

Fig. 10 is a block diagram 3 of the structure of the device for session handling according to a preferred embodiment of the invention. As shown in Figure 10, the above device includes: a first receiving unit **73** configured to receive the WTP event response message from the trusted network access gateway, wherein the WTP event response message is used to indicate a successful session creation between a trusted network access gateway and a PDN GW; a transmitting module **74** connected to the receiving unit **73** and configured to transmit to the UE an EAP success message; and a second receiving unit **75** configured to receive the WTP event response message from the trusted network access gateway, wherein the WTP event response message is used to indicate successful session deletion between the trusted network access gateway and the PDN GW.

After receiving the WTP event response message from the trusted network access gateway, if the detachment procedure is initiated by the HSS/AAA, the AP/RG may transmit to the HSS/AAA the UE deregistration confirmation message. Then the UE performs a release procedure of non-3GPP resources.

It should be noted that the device for session handling described in the device embodiments corresponds to the above method embodiments, with the specific implementation described in the method embodiment in detail, thereby needing no further description.

To sum up, according to the embodiments above of the present invention, a system and method for session handling are provided. By the present invention, a non-3GPP access network functional entity notifying a trusted network access gateway to transmit to a PND GW a create session request message or a delete session request message solves the problem in the related art, when core network charging is uniformly applied, with respect to a UE-initiated detach procedure, because a stop charging message is not received by an AAA proxy of a WLAN side, that the trusted network access gateway cannot be triggered to transmit to the PDN GW the delete session procedure, thus the shortcoming in the related art can be remedied.

Obviously, those skilled in the art shall understand that the above-mentioned modules and steps of the disclosure can be realized by using general purpose calculating device, can be integrated in one calculating device or distributed on a network which consists of a plurality of calculating devices. Alternatively, the modules and the steps of the disclosure can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The above description is only preferred embodiments of the present invention and is not intended to limit the present invention, and the present invention can have a variety of changes and modifications for ordinary person skilled in the art. Any modification, equivalent replacement, or improvement made within the principle of the present invention shall all fall within the protection scope as defined by the appended claims of the present invention.

## Claims

1. A method for session handling, **characterized by** comprising:
during a process that a User Equipment (UE) accesses an Evolved Packet Core (EPC) via a trusted non-3rd Generation Partnership Project (3GPP), a non-3GPP access network functional entity sensing successful authentication or detachment or Packet Data Network (PDN) disconnection of the UE; and
the non-3GPP access network functional entity notifying a trusted network access gateway to transmit to a Packet Data Network Gateway (PDN GW) a create session request message or a delete session request message.

2. The method according to claim 1, **characterized in that** the non-3GPP access network functional entity notifying the trusted network access gateway to transmit to the PDN GW the create session request message or the delete session request message comprises: the non-3GPP access network functional entity transmitting a Wireless Termination Point (WTP) event request message to the trusted network access gateway, wherein the WTP event request message is used to notify the trusted network access gateway to request the PDN GW to create or delete a session.

3. The method according to claim 2, **characterized in that** the non-3GPP access network functional entity transmitting the WTP event request message to the trusted network access gateway comprises: the non-3GPP access network functional entity transmitting the WTP event request message to the trusted network access gateway via a pre-established Control And Provisioning of Wireless Access Points Protocol (CAPWAP) channel.

4. The method according to claim 2, **characterized in that** in a case where the WTP event request message is used to notify the trusted network access gateway to request the PDN GW to create the session, the non-3GPP access network functional entity transmitting the WTP event request message to the trusted network access gateway comprises one of the follows:
in a case where there is an Access Point Name (APN) requested by the UE in the non-3GPP access network functional entity, the non-3GPP access network functional entity transmitting to the trusted network access gateway the WTP event request message including the APN of the UE; and
in a case where there is not the APN requested by the UE in the non-3GPP access network functional entity, the non-3GPP access network functional entity transmitting to the trusted network access gateway the WTP event request message including a default APN.

5. The method according to claim 2, **characterized in that** in a case where the WTP event request message is used to notify the trusted network access gateway to request the PDN GW to delete the session, the non-3GPP access network functional entity transmitting to the trusted network access gateway the WTP event request message comprises: the non-3GPP access network functional entity transmitting to the trusted network access gateway the WTP event request message including delete UE information.

6. The method according to claim 2, **characterized in that** after the non-3GPP access network functional entity transmits to the trusted network access gateway the WTP event request message, the method further comprises: the non-3GPP access network functional entity receiving a WTP event response message from the trusted network access gateway, wherein the WTP event response message is used to indicate a successful session creation or deletion between the trusted network access gateway and the PDN GW.

7. The method according to claim 6, **characterized in that** after the non-3GPP access network functional entity receives the WTP event response message from the trusted network access gateway, the method further comprises: in a case where the WTP event request message is used to notify the trusted network access gateway to request the PDN GW to create the session, the non-3GPP access network functional entity transmitting to the UE an Extensible Authentication Protocol (EAP) success message.

8. The method according to any one of claims 1 to 7, **characterized in that** in a case where there is an Access Point Name (APN) of the UE in the non-3GPP access network functional entity, the non-3GPP access network functional entity carries the APN and a MAC address of the UE in a WTP event request message.

9. The method according to any one of claims 1 to 7, **characterized in that** the non-3GPP access network functional entity comprises one of the following: an Access Point (AP), and a Residential Gateway (RG).

10. The method according to any one of claims 1 to 7, **characterized in that** the trusted network access gateway comprises one of the following: an Access Controller (AC), and a Broadband Network Gateway (RNG).

11. A device for session handling applied to a non-3rd Generation Partnership Project (3GPP) access network functional entity, **characterized in that** the device comprises:
a sensing module configured to sense, during a process that a User Equipment (UE) accesses an Evolved Packet Core System (EPC) via a trusted non-3GPP, successful authentication or detachment or Packet Data Network (PDN) disconnection of the UE; and
a notifying module configured to notify a trusted network access gateway to transmit to a Packet Data Network Gateway (PDN GW) a create session request message or a delete session request message.

12. The device according to claim 11, **characterized in that** the notifying module comprises: a transmitting sub-module configured to transmit a Wireless Termination Point (WTP) event request message to the trusted network access gateway, wherein the WTP event request message is used to notify the trusted network access gateway to request the PDN GW to create or delete a session.

13. The device according to claim 12, **characterized in that** the transmitting sub-module comprises: a transmitting unit configured to transmit the WTP event request message to the trusted network access gateway via a pre-established Control And Provisioning of Wireless Access Points Protocol (CAPWAP) channel.
